# EUROPÄISCHE PATENTSCHRIFT

(11) **EP 3 660 350 B1**
(45) Veröffentlichungstag und Bekanntmachung des Hinweises auf die Patenterteilung: **07.07.2021**
(21) Anmeldenummer: 18208867.4
(22) Anmeldetag: 28.11.2018
(51) Int. Cl.: F16G 13/02, F16G 15/12, F16G 15/14

(54) **KETTENGLIED UND KETTE MIT KETTENRAD**
CHAIN LINK AND CHAIN WITH CHAIN WHEEL
MAILLON DE CHAÎNE ET CHAÎNE À ROUE DENTÉE

(43) Veröffentlichungstag der Anmeldung: 03.06.2020
(73) Patentinhaber: Gebr. Konrad GmbH, 67459 Böhl-Iggelheim (DE)
(72) Erfinder: BRAUN, Jürgen, 72149 Neustetten (DE)
(74) Vertreter: Specht, Peter

(56) Entgegenhaltungen:
- EP-A1- 0 016 322
- FR-A- 1 048 178
- GB-A- 851 929
- GB-A- 1 144 735
- US-A- 2 465 929
- US-A- 2 679 762

## Beschreibung

Die Erfindung betrifft ein Kettenglied mit einer ersten Ausnehmung und einer zweiten Ausnehmung zur Aufnahme je eines Kettenbolzens. Die Erfindung betrifft auch eine Kette mit mehreren dieser Kettenglieder und ein Kettenrad zur Verwendung mit dieser Kette sowie eine Antriebseinheit mit Kette und Kettenrad.

Ein derartiges bekanntes Kettenglied (zum Beispiel US2679762A) wird für Ketten beispielsweise bei Kettenförderern verwendet. Durch große Zugkräfte bei Betrieb ergibt sich regelmäßig ein großer Verschleiß. Bei den üblichen Ketten koppelt der Kettenbolzen zwei Außenglieder und zwei Innenglieder, wodurch das am stärksten betroffene Verschleißteil bei großem Zug nachteiligerweise der Kettenbolzen oder eine darum angeordnete Lagerhülse ist.

Im Bereich der schmierstofffreien Ketten werden oftmals Gleitlagerbuchsen aus speziellen Materialien z.B. aus Messing, Bronze oder Kunststoff eingesetzt. Bei Hochtemperaturanwendungen von mehr als 180°C fließen diese Buchsen weg oder werden mit der Ringfläche plattgewalzt.

Die Aufgabe der Erfindung wird somit darin gesehen, das Kettenglied der eingangs genannten Art derart weiterzuentwickeln, dass alle Kräfte bei Betrieb immer in dem Kettenglied sind.

Die Aufgabe der Erfindung wird weiterhin darin gesehen, die Kette der eingangs genannten Art derart weiterzuentwickeln, dass ein Verschleiß des Kettenbolzens vermieden wird. Weiterhin wird die Aufgabe der Erfindung darin gesehen, das Kettenrad der eingangs genannten Art derart weiterzuentwickeln, dass es für eine verschleißarme oder sogar verschleißfreie Kette verwendet werden kann.

Zur Lösung der Aufgabe wird bei einem Kettenglied mit den Merkmalen des Oberbegriffs des Anspruchs 1 erfindungsgemäß vorgeschlagen, dass im Bereich der ersten Ausnehmung ein axial nach außen gerichteter erster Anschlag und im Bereich der zweiten Ausnehmung ein ebenfalls axial nach außen aber in Gegenrichtung zum ersten Anschlag gerichteter zweiter Anschlag derart vorgesehen sind, dass bei Betrieb Zugkräfte über die Anschläge übertragen werden. Das vorgenannte Kettenglied kann auch als Kettenlasche bezeichnet werden.

Eine Ausnehmung kann z.B. als eine Nut mit einem endständigen teilweise offenen Loch und insbesondere als eine Bohrung ausgebildet sein. Allerdings soll die Bezeichnung Bohrung nicht beschränkend auf ein Herstellungsverfahren verstanden werden. So kann das Kettenglied und die darin befindlichen Ausnehmungen insbesondere auch durch Stanzen und Umformen erreicht werden.

Aufgrund der vorgenannten Ausgestaltung des Kettenglieds wirken die Zugkräfte nur innerhalb des Kettengliedes und werden nicht auf den Kettenbolzen übertragen.

Zur Lösung der Aufgabe wird weiterhin bei einer Kette mit den Merkmalen des Oberbegriffs des Anspruchs 8 erfindungsgemäß vorgeschlagen, dass die Kette entsprechend den kennzeichnenden Merkmalen dieses Anspruchs ausgebildet ist.

Zur Lösung der Aufgabe wird bei einem Kettenrad mit den Merkmalen des Oberbegriffs des Anspruchs 10 erfindungsgemäß vorgeschlagen, dass das Kettenrad entsprechend den kennzeichnenden Merkmalen dieses Anspruchs ausgebildet ist.

Bei dem erfindungsgemäßen Kettenglied werden bei Betrieb alle Zugkräfte über den ersten Anschlag und den zweiten Anschlag aufgenommen. Dies geschieht dadurch, dass bei zwei benachbarten Kettengliedern die Anschläge derart aneinander liegen, dass das vordere Kettenglied das hintere Kettenglied in Zugrichtung mitzieht. Dadurch kommen auf die Kettenbolzen keine Kräfte mehr, sodass diese verschleißfrei bleiben.

Damit die Zugkräfte nicht punktuell sondern möglichst großflächig von dem Kettenglied aufgenommen werden, sieht eine Weiterbildung der Erfindung vor, dass der erste Anschlag und der zweite Anschlag je eine senkrecht zur Längsmittellinie des Kettengliedes verlaufende Zugfläche aufweisen. Bei Betrieb wäre es denkbar, dass sich durch die Zugkräfte das Kettenglied bezüglich einer Mittelachse eines Kettenbolzens verschiebt, sodass noch Teilkräfte auf den Kettenbolzen wirken könnten. Um dies zu vermeiden sieht eine Ausgestaltung der Erfindung vor, dass die Zugfläche des ersten Anschlags zentral zur ersten Ausnehmung und die Zugfläche des zweiten Anschlags zentral zur zweiten Ausnehmung angeordnet sind. Wenn das Kettenglied über ein Kettenrad läuft, so können auch hier Kräfte auf den Kettenbolzen oder eine den Kettenbolzen umgebende Hülse einwirken, wodurch es wiederum zu einem Verschleiß kommt. Hülsen werden z.B. auch bei Hochtemperaturanwendungen von mehr als 180°C eingesetzt, so dass die erfindungsgemäße Kette als schmiermittelfreie Kette ausgebildet sein kann.

Eine Weiterbildung der Erfindung sieht daher vor, dass der erste Anschlag und der zweite Anschlag je eine parallel zur Längsmittellinie des Kettengliedes verlaufende Stützfläche zum Abstützen auf einem Kettenrad aufweisen. Das Kettenglied stützt sich nun mit den Stützflächen der Anschläge auf dem Kettenrad ab und eine Kräfteeinwirkung auf den Kettenbolzen wird dadurch vermieden. Im weiteren Verlauf der Umlenkung der Kettenglieder über das Kettenrad sind weitere Abstützungen erforderlich. Eine weitere Ausführungsform der Erfindung sieht deshalb vor, dass schräg zur Längsmittellinie verlaufende Stützränder zum Abstützen auf einem Kettenrad vorgesehen sind.

Eine weitere Ausgestaltung der Erfindung sieht vor, dass die erste Ausnehmung über eine erste Nut und die zweite Ausnehmung über eine zweite Nut zur Außenumrandung des Kettengliedes hin teilweise offen sind. Dies hat fertigungstechnische Vorteile für das Kettenglied. Das Kettenglied kann aus einem plattenartigen Grundkörper hergestellt werden, wobei der erste Anschlag und der zweite Anschlag aus dem Grundkörper heraus nach außen aufgebogen werden. Vorteilhafterweise ist der zweite Anschlag länger ausgebildet als der erste Anschlag.

Vorteilhaft kann die Abkantung bzw. Biegung des Anschlags gegenüber dem Grundkörper 90° betragen. Andernfalls können unerwünschte Relativbewegungen auftreten.

Die erfindungsgemäße Kette mit einer Mehrzahl von erfindungsgemäßen Kettengliedern weist eine mindestens einreihige Anordnung derart auf, dass an jedem Kettenbolzen zwei Kettenglieder angeordnet sind, wobei zumindest jeweils eine Zugfläche von zwei benachbarten Kettengliedern bei Zug aneinander liegen. Eine vorteilhafte Ausgestaltung der Erfindung sieht vor, dass eine zweireihige Anordnung der Kettenglieder derart vorgesehen ist, dass an jedem Kettenbolzen vier Kettenglieder angeordnet sind. Die Zugflächen liegen wieder entsprechend an.

Ein erfindungsgemäßes Kettenrad weist eine Rotationsachse auf. Weiterhin definieren die Zähne eine ringförmige Ebene, welche senkrecht zur Rotationsachse verläuft. Das Kettenrad kann beispielsweise plattenförmig aufgebaut sein, so dass die Plattenebene des Kettenrades entlang der vorgenannten ringförmigen Ebene verläuft. Allerdings können auch einige Bereiche des Kettenrades gegenüber der ringförmigen Ebene hervorstehen oder zurückgesetzt sein. Axial, bezogen auf die Rotationsachse, stehen aus der besagten ringförmigen Ebene mehrere Kettenstützen hervor, welche zur Abstützung eines Kettengliedes auf dem Kettenrad, insbesondere bei der Umlenkung der Kette, dienen.

Vorteilhaft kann bei dem Kettenrad zur Verwendung mit den erfindungsgemäßen Kettengliedern oder mit der erfindungsgemäßen Kette zwischen je zwei benachbarten Zähnen die sich axial erstreckende Kettenstütze vorgesehen sein. Im Verlauf der Umlenkung eines Kettengliedes oder einer Kette muss das Kettenglied an verschiedenen Bereichen auf der Kettenstütze abgestützt werden.

Eine weitere Ausführungsform der Erfindung sieht deshalb vor, dass die Kettenstütze eine Abstützoberfläche zum Abstützen der Stützränder des Kettengliedes aufweist. Eine weitere Ausführungsform sieht vor, dass die Kettenstütze eine Abstützseitenfläche zum Abstützen der Stützfläche des zweiten Anschlages aufweist. Durch Drehung des Kettenrades wird das Kettenglied in Zugrichtung bewegt. Damit auch hier alle Zugkräfte nur innerhalb des Kettengliedes wirken, sieht eine Weiterbildung vor, dass jeder Zahn eine radial verlaufende Anlagefläche zur Anlage mit einer Eingriffsfläche des zweiten Anschlages aufweist. Die Anlagefläche drückt bei Drehung des Kettenrades gegen die Eingriffsfläche, so dass die Kräfte nur auf den Anschlag und nicht auf einen Kettenbolzen übertragen werden.

Weiterhin erfindungsgemäß ist eine Antriebseinheit umfassend die erfindungsgemäße Kette und das erfindungsgemäße Kettenrad.

Die Kette kann dabei in einer Ausführungsvariante derart durch das Kettenrad umgelenkt werden, dass im Umlenkbereich des Kettenrades ein Kettenglied mit einem ersten Anschlag an einem zweiten Anschlag eines ersten benachbarten Kettengliedes anliegt und ein zweiter Anschlag des Kettengliedes von einem ersten Anschlag eines zweiten benachbarten Kettengliedes winklig beabstandet ist. Somit erfolgt eine Kraftübertragung über die anliegenden Anschläge und zugleich wird ein Abwinkeln der Kette für eine Umlenkung erreicht.

Die korrespondierenden Zugflächen der anliegenden Anschläge zweier benachbarter Kettenglieder sind im Umlenkbereich des Kettenrades radial zur Rotationsachse des Kettenrades in einer ersten Raumrichtung und senkrecht zur Rotationsachse des Kettenrades in einer zweiten Raumrichtung angeordnet. Dadurch werden vorteilhaft Relativbewegungen zur Achse vermieden.

Insgesamt kann die Kette als schmierfreie Kette verwendet werden. Bevorzugte Anwendungen solcher Ketten sind Kettenförderer oder auch Waschstraßen. Die Kette kann problemlos in bestehende Anlagen eingesetzt werden.

Die Erfindungen werden nachstehend anhand der Zeichnung näher erläutert. Hierbei stellen dar:
Fig. 1 eine perspektivische Ansicht eines Kettengliedes,
Fig. 2 eine Seitenansicht nach Fig. 1,
Fig. 3 eine Draufsicht nach Fig. 2,
Fig. 4 eine Rückansicht nach Fig.3,
Fig. 5 eine perspektivische Ansicht einer Kette in abgebrochener Darstellung und in teilweiser Explosionsdarstellung mit Kettenrad als Teil einer Antriebseinheit,
Fig. 6 eine weitere perspektivische Ansicht einer abgebrochenen Kette mit Kettenrad und
Fig. 7 eine Seitenansicht nach Fig. 6.

Das erfindungsgemäße Kettenglied 1 weist eine Grundplatte 2 mit einer ersten Ausnehmung 3 und einer zweiten Ausnehmung 4 auf. Eine Mittelachse 5 der ersten Ausnehmung 3 und eine Mittelachse 5 der zweiten Ausnehmung 4 sind auf einer Längsmittellinie 6 der Grundplatte 2 angeordnet. Die Grundplatte 2 besteht aus Metall und weist an beiden Enden ein Rundprofil 7, 8 auf. Das Rundprofil 7 weist an seinem freien Ende einen ersten Anschlag 9 auf, welcher im Bereich der ersten Ausnehmung 3 angeordnet ist. Der erste Anschlag 9 ist bezüglich der Mittelachse 5 axial derart nach außen gerichtet, dass er sich senkrecht zu einer Plattenebene der Grundplatte 2 erstreckt. Am freien Ende 10 des Rundprofils 8 ist ein zweiter Anschlag 10 vorgesehen, welcher im Bereich der zweiten Ausnehmung 4 angeordnet ist. Der zweite Anschlag 10 erstreckt sich ebenfalls bezüglich der Mittelachse 5 axial nach außen, jedoch in Gegenrichtung zu dem ersten Anschlag 9. Der zweite Anschlag 10 erstreckt sich ebenfalls senkrecht zu der Plattenebene, in welcher die Grundplatte 2 liegt. Der zweite Anschlag 10 liegt bezüglich der Längsmittellinie 6 unten, also auf der anderen Seite wie der erste Anschlag 9, welcher bezüglich der Längsmittellinie 6 oben liegt. Der zweite Anschlag 10 ist etwas länger ausgebildet als der erste Anschlag 9. Der erste Anschlag 9 ist mit dem Rundprofil 7 über einen Umlenkbereich 11 von 90 Grad verbunden. Ebenso ist der zweite Anschlag 10 über einen Umlenkbereich 12 von 90 Grad mit dem Rundprofil 8 verbunden. Der Umlenkbereich 11 und der Umlenkbereich 12 ragen nur wenig über die Seitenwände 13, 14 der Grundplatte 2 hinaus. Der erste Anschlag 9 weist eine Zugfläche 15 auf. Ebenso weist der zweite Anschlag 10 eine Zugfläche 16 auf. Die Zugfläche 15 und die Zugfläche 16 verlaufen jeweils senkrecht zu der Plattenebene, in welcher die Grundplatte 2 liegt, und somit auch senkrecht zur Längsmittellinie 6 des Kettengliedes 1. Sind mehrere Kettenglieder 1 bei einer Kette verbunden, so liegen diese Zugflächen 15, 16 an entsprechenden Zugflächen 15, 16 des zweiten Kettengliedes 1 an, damit die Zugkraft von dem ersten Kettenglied 1 auf das zweite Kettenglied 1 übertragen wird. Bei zwei nachfolgenden Kettengliedern 1 liegen jeweils die Zugfläche 15 des vorderen Kettengliedes 1 auf der Zugfläche 16 des nachfolgenden Kettengliedes 1 und die Zugfläche 16 des ersten Kettengliedes 1 liegt an der Zugfläche 15 des nachfolgenden Kettengliedes 1 an. Die Zugfläche 15 des ersten Anschlages 9 ist zentral zur ersten Ausnehmung 3 und damit zentral zur Mittelachse 5 ausgerichtet und die Zugfläche 16 des zweiten Anschlags 10 ist ebenfalls zentral zur zweiten Ausnehmung 4 und damit zentral zur Mittelachse 5 der zweiten Ausnehmung 4 ausgerichtet.

Das Rundprofil 7 des Kettengliedes 1 geht in seinem geschlossenen Bereich in einen trapezartigen Mittelteil 17 des Kettengliedes 1 über. Entsprechend geht das trapezartige Mittelteil 17 auf der anderen Seite in den geschlossenen Bereich des Rundprofils 8 über. Das Mittelteil 17 weist einen unteren Rand 18 und einen oberen Rand 19 auf. Der untere Rand 18 und der obere Rand 19 verlaufen beide parallel zur Längsmittellinie 6 des Kettengliedes 1. Zwischen dem unteren Rand 18 und dem oberen Rand 19 weist das Mittelteil 17 einen ersten schrägverlaufenden Stützrand 20 und einen zweiten schrägverlaufenen Stützrand 21 auf. Der erste Stützrand 20 und auch der zweite Stützrand 21 verlaufen mit etwa 35 Grad gegenüber der Längsmittellinie 6 des Kettengliedes 1.

Der Stützrand 20 bildet eine Begrenzung einer ersten Nut 23, welche von der ersten Ausnehmung 3 zu einer Außenumrandung des Kettengliedes 1 hin derart verläuft, dass die erste Ausnehmung 3 zur Außenumrandung des Kettengliedes 1 hin teilweise offen ist. Der zweite Stützrand 21 bildet eine Begrenzung einer zweiten Nut 24, welche von der zweiten Ausnehmung 4 zur Außenumrandung des Kettengliedes 1 hin derart verläuft, dass die zweite Ausnehmung 4 zur Außenumrandung hin teilweise offen ist. Damit ist das Kettenglied 1 etwa S-förmig ausgebildet.

Der erste Anschlag 9 weist weiterhin eine Stützfläche 25 auf. Entsprechend weist der zweite Anschlag 10 eine Stützfläche 26 auf. Die Stützfläche 25 und die Stützfläche 26 verlaufen jeweils parallel zu einer Längsmittelebene des Kettengliedes 1, in welcher auch die Längsmittellinie 6 liegt. Die Stützfläche 25 und die Stützfläche 26 dienen zum Abstützen auf einem Kettenrad. Die Stützfläche 25 verläuft senkrecht zur Zugfläche 15 und die Stützfläche 26 verläuft senkrecht zur Zugfläche 16.

Bei Benutzung des Kettengliedes 1 innerhalb einer Kette liegen die Kettenzugkräfte immer an den Zugflächen 15, 16 an und nicht mehr an den Kettenbolzen. Dadurch nimmt das Kettenglied 1 alle Kräfte auf und die Kettenbolzen werden nicht mehr belastet. Die Kettenbolzen sind somit keine Verschleißteile mehr wie bisher im Stand der Technik.

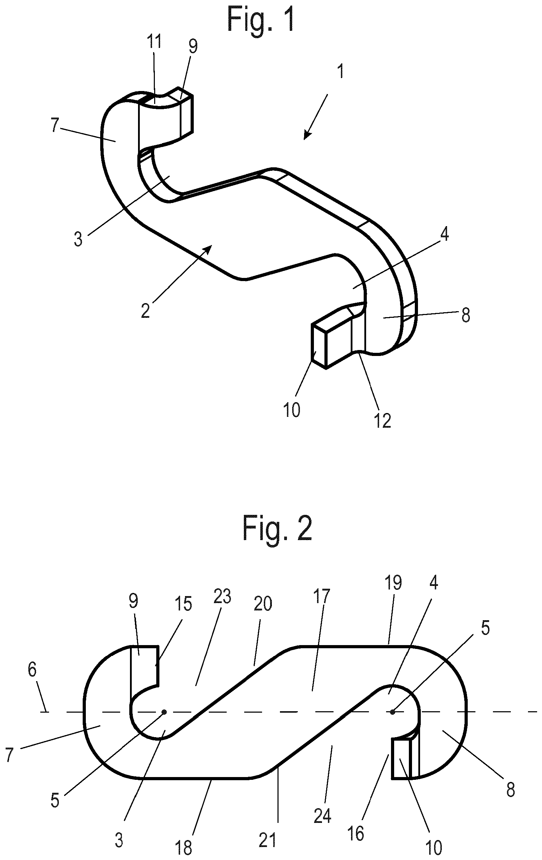

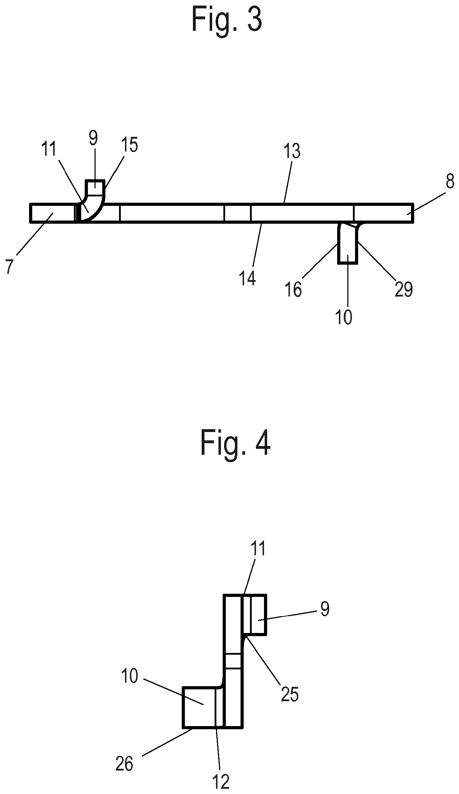

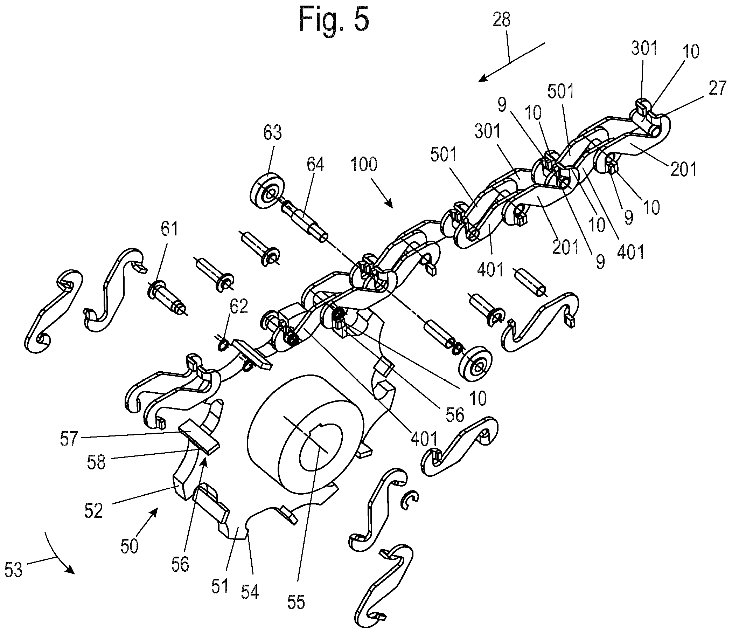

In Fig. 5 ist eine abgebrochene Darstellung einer Kette 100 mit den erfindungsgemäßen Kettengliedern dargestellt. Um die Kette 100 aufzubauen verwendet man zwei Arten von Kettengliedern. Einerseits das in den Fig. 1 bis 4 dargestellte Kettenglied 1 sowie ein weiteres Kettenglied 1, welches eine spiegelsymmetrische Ausbildung des Kettengliedes 1 gemäß Fig. 1 bis 4 bezüglich seiner Plattenebene ist, in welcher die Grundplatte 2 liegt. Die Kette 100 weist ein erstes Außenkettenglied 201, wie in Fig. 2 dargestellt aber um 180 Grad um die Längsmittellinie 6 gedreht und ein zweites Außenkettenglied 301 auf, welches eine spiegelsymmetrische Ausbildung des Außenkettengliedes 201 ist. Weiterhin ist ein Innenkettenglied 401, wie in Fig. 2 dargestellt, und ein entsprechendes aber spiegelsymmetrisches Innenkettenglied 501 vorgesehen. In den Ausnehmungen 3, 4 der Kettenglieder 201, 301, 401 und 501 sind Kettenbolzen 27 vorgesehen. Die Kette 100 wird in Zugrichtung 28 bewegt. Wie aus Fig. 5 ersichtlich, liegt bei der erfindungsgemäßen Kette 100 die Zugfläche 15 des ersten Anschlags 9 des Außenkettengliedes 201 an der Zugfläche 16 des zweiten Anschlags 10 des Innenkettengliedes 401 an. Der erste Anschlag 9 des Innenkettengliedes 401 liegt in Zugrichtung 28 gesehen an dem zweiten Anschlag 10 des vorhergehenden Außenkettengliedes 201 an. Der Aufbau der Kette 100 setzt sich auf dieser Kettenseite entsprechend fort. Der Aufbau ist auf der anderen Kettenseite entsprechend ausgebildet. So liegt der erste Anschlag 9 des Außenkettengliedes 301 an dem zweiten Anschlag 10 des Innenkettengliedes 501 an. Der erste Anschlag 9 des Innenkettengliedes 501 liegt an dem zweiten Anschlag 10 des vorhergehenden Außenkettengliedes 301 an. Bei Betrieb der Kette 100 werden die Zugkräfte, wie schon vorstehend bei dem Kettenglied 1 beschrieben, nur über die Ansätze 9, 10 und damit über die gesamte Struktur des Kettengliedes 1 übertragen. Es wirkt keine Kraft bei Betrieb auf einen Kettenbolzen 27 ein. Damit ist die Kette 100 hinsichtlich des Kettenbolzens 27 verschleißfrei.

Für den Betrieb der Kette 100 ist ein spezielles Kettenrad 50 erforderlich. Das Kettenrad 50 weist mehrere Zähne 51 auf, welche bei Betrieb in Eingriff zwischen die Außenkettenglieder 201, 301 bzw. die Innenkettenglieder 401 und 501 gelangen. Jeder Zahn 51 ist an seiner Oberseite 52 flach ausgebildet. Jeder Zahn 51 weist an seiner in Drehrichtung 53 gesehenen Vorderseite eine Anlagefläche 54 auf, welche sich radial zur Mittelachse 55 des Kettenrades 50 erstreckt. Wird die Kette 100 in Zugrichtung 28 bewegt, dann kommt die Anlagefläche 54 zur Anlage mit einer Eingriffsfläche 29 des Anschlags 10 des Außenkettengliedes 201. Die Eingriffsfläche 29 ist bei dem Anschlag 10 an der gegenüberliegenden Seite zur Zugfläche 16 angeordnet. Auf diese Weise wird die Kette 100 durch das Kettenrad 50 in Drehrichtung 53 fortbewegt.

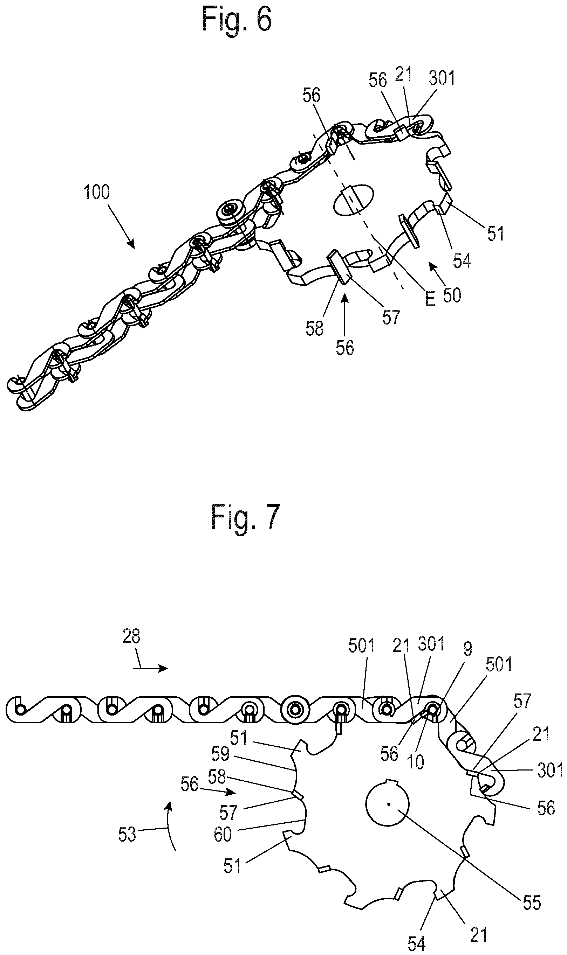

Zwischen zwei Zähnen 51 ist jeweils eine Kettenstütze 56 vorgesehen. Die Kettenstütze 56 ist quaderförmig ausgebildet und auf die Umfangsfläche des Kettenrades 50 montiert. Die Kettenstütze 56 weist eine nach außen gerichtete Abstützoberfläche 57 und eine nach außen gerichtete Abstützseitenfläche 58 auf. Die Kettenstütze 56 ragt an beiden Seiten des Kettenrades 50 über die Dicke des Kettenrades 50 hinaus. Im Verlauf der Kettenbewegung der Kette 100 über das Kettenrad 50 kommt es zu verschiedenen Abstützungen der Kette 100 bezüglich des Kettenrades 50. Wie aus Fig. 5 ersichtlich, stützt sich zu Beginn die Stützfläche 26 des zweiten Anschlages 10 des Innenkettengliedes 401 auf der Abstützseitenfläche 58 der Kettenstütze 56 ab. Im weiteren Verlauf der Drehbewegung um das Kettenrad 50 stützt sich der Stützrand 21 des Außenkettengliedes 301 bzw. 201 auf der Abstützoberfläche 57 ab. Der Abstützvorgang im Verlauf der Kettenbewegung der Kette 100 über das Kettenrad 50 ist in den Fig. 6 und 7 gut zu erkennen. Während das vorderste Außenkettenglied 301 sich mit seinem Stützrand 21 an der Abstützoberfläche 57 abstützt, stützt sich in den zwei nachfolgenden Kettengliedern der Anschlag 10 der Innenkettenglieder 401 bzw. 501 mit seiner Stützfläche 26 auf der Abstützseitenfläche 58 der Kettenstütze 56 ab. Bei dem dem ersten Außenkettenglied 301 nachfolgenden Außenkettenglied 301 stützt sich gleichzeitig auch noch der Stützrand 21 auf der Abstützoberfläche 57 ab. Dadurch entfernen sich der Anschlag 10 des Innenkettengliedes 501 und der Anschlag 9 des Außenkettengliedes 301 voneinander, sodass sich die Kette 100 über das Kettenrad 50 abwickeln kann.

Die Kettenstütze 56 ist in der Mitte zwischen zwei Zähnen 51 angeordnet. Von der Kettenstütze 56 ausgehend ist in Drehrichtung 53 gesehen ein erster konkaver Übergangsbereich 59 vorgesehen. Entgegen der Drehrichtung 53 zum Zahn 51 hin ist von der Kettenstütze 56 ausgehend ein zweiter bauchiger Übergangsbereich 60 vorgesehen. Die Übergangsbereiche 59 und 60 sind so ausgebildet, dass sie den Kettenablauf über das Kettenrad nicht negativ beeinflussen.

Fig. 5 zeigt zudem die Festlegung der Kettenbolzen 27 außenseitig zu den Kettengliedern. Diese erfolgt über jeweils zwei endständige Sprengringe 61. Weiterhin sind die Kettenbolzen 27 mit Lagerringen 62 versehen. Der Kettenbolzen 27 ist zudem mit einer Lagerhülse 64 versehen, welcher über den Kettenbolzen gestreift ist. Die Lagerhülse 64 und/oder die Lagerringe 62 ermöglicht den Ersatz von Schmiermitteln, so dass die Kette 100 als schmierfreie Kette, insbesondere als Hochleistungskette für Einsatztemperaturen von mehr als 180°C, ausgebildet sein kann. Die Lagerhülse 64 kann dabei als eine Gleitlagerbuchse verstanden werden und aus Messing, Bronze oder Kunststoff bestehen. Diese weichen Materialien ermöglichen die schmierstofffreie Lagerung. Zugleich werden sie aufgrund neuartigen Kraftübertragung der Zugkräfte nicht plattgewalzt.

Da nur jede zweite Einheit ein Abkippen beim Umlenken ermöglicht, bilden zwei benachbarte Kettenglieder 301 und 501 vorzugsweise eine Einheit nach Art einer Kettenlasche. Diese Einheit kann vorzugsweise zwischen 140 bis 180 mm lang sein.

Der Nachteil dieser Einheit anstelle einer herkömmlichen Kettenlasche ist, dass doppelt so viele Kettenbolzen 27 benötigt werden, allerdings wird dieser Nachteil durch den Vorteil einer im Wesentlichen verschleißfreien Kraftübertragung mehr als ausgeglichen.

Da nunmehr der Kettenbolzen 27 keine Zugkräfte mehr aufnehmen muss, kann er auch kleiner dimensioniert werden. Ein Materialabtrag am Kettenbolzen 27 tritt nicht mehr auf. So sind Kettenbolzen mit einem Durchmesser von weniger als 16 mm für die Kette verwendbar und sogar Kettenbolzen im Bereich zwischen 8 bis 12 mm.

Derartige Ketten sind wartungsarm und sind so innerhalb einer Anlage angeordnet, dass kein Schmutzeintrag erfolgt. Einzelne Kettenbolzen können zudem einen Tragrollen 63 aufweisen, welche zum Abtragen von Lasten dienen.

Als Material für die Kettenglieder kann C45 Vergütungsstahl eingesetzt werden. Optional können mechanisch stark belastete Bereiche, wie die Stützflächen, Stützränder und Zugflächen durch Randschichthärten zusätzlich behandelt werden.

Die anderen Bereiche können unbehandelt bleiben und unterliegen daher keiner Materialversprödung.

### Bezugszeichenliste

- 1: Kettenglied
- 2: Grundplatte
- 3: Ausnehmung
- 4: Ausnehmung
- 5: Mittelachse
- 6: Längsmittellinie
- 7: Rundprofil
- 8: Rundprofil
- 9: erster Anschlag
- 10: zweiter Anschlag
- 11: Umlenkbereich
- 12: Umlenkbereich
- 13: Seitenwände
- 14: Seitenwände
- 15: Zugfläche
- 16: Zugfläche
- 17: Mittelteil
- 18: Rand
- 19: Rand
- 20: Stützrand
- 21: Stützrand
- 23: Nut
- 24: Nut
- 25: Stützfläche
- 26: Stützfläche
- 27: Kettenbolzen
- 28: Zugrichtung
- 29: Eingriffsfläche
- 50: Kettenrad
- 51: Zähne
- 52: Oberseite
- 53: Drehrichtung
- 54: Anlagefläche
- 55: Mittelachse
- 56: Kettenstütze
- 57: Abstützoberfläche
- 58: Abstützseitenfläche
- 59: Übergangsbereich
- 60: zweiter bauchiger Übergangsbereich

- 61: Sprengring
- 62: Lagerring
- 63: Transportrolle
- 64: Lagerhülse

- 100: Kette
- 201: Außenkettenglied
- 301: Außenkettenglied
- 401: Innenkettenglied
- 501: Innenkettenglied

## Patentansprüche

1. Kettenglied (1) mit einer ersten Ausnehmung (3) und einer zweiten Ausnehmung (4) zur Aufnahme je eines Kettenbolzens (27),
wobei im Bereich der ersten Ausnehmung (3) ein axial nach außen gerichteter erster Anschlag (9) und im Bereich der zweiten Ausnehmung (4) ein ebenfalls axial nach außen aber in Gegenrichtung zum ersten Anschlag (9) gerichteter zweiter Anschlag (10) derart vorgesehen sind, dass bei Betrieb Zugkräfte über die Anschläge (9 und 10) übertragen werden,
**dadurch gekennzeichnet, dass**
schräg zur Längsmittellinie (6) verlaufende Stützränder (20, 21) zum Abstützen auf einem Kettenrad (50) vorgesehen sind.

2. Kettenglied nach Anspruch 1, **dadurch gekennzeichnet, dass** der erste Anschlag (9) und der zweite Anschlag (10) je eine senkrecht zur Längsmittellinie (6) des Kettengliedes (1) verlaufende Zugfläche (15, 16) aufweisen.

3. Kettenglied nach Anspruch 2, **dadurch gekennzeichnet, dass** die Zugfläche (15) des ersten Anschlages (9) zentral zur ersten Ausnehmung (3) und die Zugfläche (16) des zweiten Anschlages (10) zentral zur zweiten Ausnehmung (4) angeordnet sind.

4. Kettenglied nach einem der vorhergehenden Ansprüche, **dadurch gekennzeichnet, dass** der erste Anschlag (9) und der zweite Anschlag (10) je eine parallel zur Längsmittellinie (6) des Kettengliedes (1) verlaufende Stützfläche (25, 26) zum Abstützen auf einem Kettenrad (50) aufweisen.

5. Kettenglied nach einem der vorhergehenden Ansprüche, **dadurch gekennzeichnet, dass** die erste Ausnehmung (3) über eine erste Nut (23) und die zweite Ausnehmung (4) über eine zweite Nut (24) zur Außenumrandung des Kettengliedes (1) hin teilweise offen sind.

6. Kettenglied nach einem der vorhergehenden Ansprüche, **dadurch gekennzeichnet, dass** der zweite Anschlag (10) länger ausgebildet ist als der erste Anschlag (9).

7. Kette (100) umfassend eine Mehrzahl von Kettenglieder (201, 301, 401, 501) nach einem der vorhergehenden Ansprüche, welche in einer mindestens einreihigen Anordnung über Kettenbolzen (27) miteinander verbunden sind, derart, dass an jedem Kettenbolzen (27) zwei Kettenglieder (201, 401) angeordnet sind, wobei zumindest jeweils eine Zugfläche (15, 16) von zwei benachbarten Kettengliedern (201, 401) bei Zug aneinander liegen.

8. Kette nach Anspruch 7, **dadurch gekennzeichnet, dass** die Kettenglieder (201, 301, 401, 501) mittels der Kettenbolzen (27) in einer zweireihigen Anordnung angeordnet sind derart, dass an jedem Kettenbolzen (27) vier Kettenglieder (201, 301, 401, 501) angeordnet sind.

9. Kettenrad (50) zur Verwendung mit Kettenglieder (1, 201, 301, 401, 501) nach einem der vorhergehenden Ansprüche 1 bis 6 oder mit einer Kette nach einem der Ansprüche 7 und 8, wobei das Kettenrad (50) eine Rotationsachse (55) aufweist und mehrere Zähne (51) welche eine ringförmige Ebene (E) definieren, die senkrecht zur Rotationsachse (55) verläuft, **dadurch gekennzeichnet, dass** das Kettenrad (50) mehrere axial aus der Ebene (E) hervorstehende Kettenstützen (56) aufweist, zur Abstützung eines Kettengliedes (1, 201, 301, 401, 501) auf der jeweiligen Kettenstütze (56).

10. Kettenrad nach Anspruch 9, **dadurch gekennzeichnet, dass** jeweils eine der Kettenstützen (56) zwischen je zwei benachbarten Zähnen (51) angeordnet ist.

11. Kettenrad nach Anspruch 9 oder 10, **dadurch gekennzeichnet,**
**dass** die Kettenstütze (56) eine Abstützfläche (57) zum Abstützen der Stützränder (20, 21) des Kettengliedes (1) aufweist.

12. Kettenrad nach Anspruch 9 , 10 oder 11, **dadurch gekennzeichnet,**
**dass** die Kettenstütze (56) eine Abstützseitenfläche (58) zum Abstützen der Stützfläche (26) des zweiten Anschlages (10) aufweist.

13. Kettenrad nach einem der vorhergehenden Ansprüche 9 bis 12,
**dadurch gekennzeichnet, dass** jeder Zahn (51) eine radial verlaufende Anlagefläche (54) zur Anlage mit einer Eingriffsfläche (29) des zweiten Anschlages (10) aufweist.

14. Antriebseinheit **dadurch gekennzeichnet, dass** die Antriebseinheit eine Kette (100) nach einem der Ansprüche 8 bis 9 und ein Kettenrad (50) nach einem der Ansprüche 9 bis 13.

15. Antriebseinheit nach Anspruch 14, **dadurch gekennzeichnet, dass** die Kette (100) derart durch das Kettenrad (50) umgelenkt wird, dass im Umlenkbereich des Kettenrades (50) ein Kettenglied (301) mit einem ersten Anschlag (9) an einem zweiten Anschlag (10) eines ersten benachbarten Kettengliedes (501) anliegt und ein zweiter Anschlag (10) des Kettengliedes (301) von einem ersten Anschlag (9) eines zweiten benachbarten Kettengliedes (501) winklig beabstandet ist.

16. Antriebseinheit nach einem der Ansprüche 14 oder 15, **dadurch gekennzeichnet, dass** die korrespondierenden Zugflächen (15, 16) der anliegenden Anschläge (9, 10) zweier benachbarter Kettenglieder (301, 501) im Umlenkbereich des Kettenrades (50) radial zur Rotationsachse (55) des Kettenrades (50) in einer ersten Raumrichtung und senkrecht zur Rotationsachse (55) des Kettenrades in einer zweiten Raumrichtung angeordnet sind.

## Claims

1. Chain link (1) having a first recess (3) and a second recess (4) for accommodating one chain pin (27) in each case, wherein a first stop (9) which is directed axially outwards is provided in the region of the first recess (3) and a second stop (10) which is likewise directed axially outwards but in the opposite direction to the first stop (9) is provided in the region of the second recess (4) in such a manner that during operation traction forces are transmitted via the stops (9 and 10), **characterized in that** support edges (20, 21) extending obliquely to the longitudinal center line (6) are provided for support on a chain wheel (50).

2. Chain link according to claim 1, **characterized in that** the first stop (9) and the second stop (10) each have a traction surface (15, 16) extending perpendicularly to the longitudinal center line (6) of the chain link (1).

3. Chain link according to claim 2, **characterized in that** the traction surface (15) of the first stop (9) is arranged centrally to the first recess (3) and the traction surface (16) of the second stop (10) is arranged centrally to the second recess (4).

4. Chain link according to one of the preceding claims, **characterized in that** the first stop (9) and the second stop (10) each have a support surface (25, 26) extending parallel to the longitudinal center line (6) of the chain link (1) for support on a chain wheel (50).

5. Chain link according to one of the preceding claims, **characterized in that** the first recess (3) is partially open towards the outer edge of the chain link (1) via a first groove (23) and the second recess (4) is partially open towards the outer edge of the chain link (1) via a second groove (24).

6. Chain link according to one of the preceding claims, **characterized in that** the second stop (10) is formed longer than the first stop (9).

7. Chain (100) comprising a plurality of chain links (201, 301, 401, 501) according to one of the preceding claims, which are connected to one another in an at least single-row arrangement via chain pins (27) in such a way that two chain links (201, 401) are arranged on each chain pin (27), wherein at least one traction surface (15, 16) of two adjacent chain links (201, 401) in each case lie against one another when traction is applied.

8. Chain according to claim 7, **characterized in that** the chain links (201, 301, 401, 501) are arranged in a two-row arrangement by means of the chain pins (27) in such a way that four chain links (201, 301, 401, 501) are arranged on each chain pin (27).

9. Chain wheel (50) for use with chain links (1, 201, 301, 401, 501) according to one of the preceding claims 1 to 6 or with a chain according to one of claims 7 and 8, wherein the chain wheel (50) has an axis of rotation (55) and a plurality of teeth (51) defining an annular plane (E) which extends perpendicularly to the axis of rotation (55), **characterized in that** the chain wheel (50) comprises a plurality of chain supports (56) projecting axially from the plane (E) for supporting a chain link (1, 201, 301, 401, 501) on the respective chain support (56).

10. Chain wheel according to claim 9, **characterized in that** in each case one of the chain supports (56) is arranged between two adjacent teeth (51) each.

11. Chain wheel according to claim 9 or 10, **characterized in that** the chain support (56) has a support surface (57) for supporting the support edges (20, 21) of the chain link (1).

12. Chain wheel according to claim 9, 10 or 11, **characterized in that** the chain support (56) has a supporting side surface (58) for supporting the support surface (26) of the second stop (10).

13. Chain wheel according to one of the preceding claims 9 to 12, **characterized in that** each tooth (51) has a radially extending abutment surface (54) for abutment with an engagement surface (29) of the second stop (10).

14. Drive unit, **characterized in that** the drive unit comprises a chain (100) according to one of claims 8 to 9 and a chain wheel (50) according to one of claims 9 to 13.

15. Drive unit according to claim 14, **characterized in that** the chain (100) is deflected by the chain wheel (50) in such a way that, in the deflection region of the chain wheel (50), a chain link (301) rests with a first stop (9) against a second stop (10) of a first adjacent chain link (501) and a second stop (10) of the chain link (301) is angularly spaced apart from a first stop (9) of a second adjacent chain link (501).

16. Drive unit according to one of claims 14 or 15, **characterized in that** the corresponding traction surfaces (15, 16) of the abutting stops (9, 10) of two adjacent chain links (301, 501) in the deflection region of the chain wheel (50) are arranged radially with respect to the axis of rotation (55) of the chain wheel (50) in a first spatial direction and perpendicularly to the axis of rotation (55) of the chain wheel in a second spatial direction.

## Revendications

1. Maillon de chaîne (1) avec un premier creux (3) et un deuxième creux (4) destinés à recevoir chacun un tourillon de chaîne (27),
dans lequel sont prévues au niveau du premier creux (3) une première butée (9) dirigée vers l'extérieur dans le sens axial et au niveau du deuxième creux (4) une deuxième butée (10) également dirigée vers l'extérieur dans le sens axial, mais en sens inverse de la première butée (9), de telle façon qu'en fonctionnement, des forces de traction soient transmises par les butées (9 et 10),
**caractérisé en ce que** des bords d'appui (20, 21) obliques par rapport à l'axe longitudinal médian (6) sont prévus pour l'appui sur une roue à chaîne (50).

2. Maillon de chaîne selon la revendication 1, **caractérisé en ce que** la première butée (9) et la deuxième butée (10) présentent chacune une surface de traction (15, 16) perpendiculaire à l'axe longitudinal médian (6) du maillon de chaîne (1).

3. Maillon de chaîne selon la revendication 2, **caractérisé en ce que** la surface de traction (15) de la première butée (9) est disposée au centre par rapport au premier creux (3) et la surface de traction (16) de la deuxième butée (10) est disposée au centre par rapport au deuxième creux (4).

4. Maillon de chaîne selon l'une des revendications précédentes, **caractérisé en ce que** la première butée (9) et la deuxième butée (10) présentent chacune une surface d'appui (25, 26) parallèle à l'axe longitudinal médian (6) du maillon de chaîne (1) pour s'appuyer sur une roue à chaîne (50).

5. Maillon de chaîne selon l'une des revendications précédentes, **caractérisé en ce que** le premier creux (3) est en partie ouvert par une première gorge (23) et le deuxième creux (4) par une deuxième gorge (24) vers le périmètre extérieur du maillon de chaîne (1).

6. Maillon de chaîne selon l'une des revendications précédentes, **caractérisé en ce que** la deuxième butée (10) est plus longue que la première butée (9).

7. Chaîne (100) comprenant plusieurs maillons de chaîne (201, 301, 401, 501) selon l'une des revendications précédentes, qui sont reliés les uns aux autres dans une disposition sur au moins un rang par des tourillons de chaîne (27), de telle façon que deux maillons de chaîne (201, 401) sont disposés sur chaque tourillon de chaîne (27), au moins une surface de traction (15, 16) de deux maillons de chaîne (201, 401) voisins reposant sur l'autre en cas de traction.

8. Chaîne selon la revendication 7, **caractérisée en ce que** les maillons de chaîne (201, 301, 401, 501) sont disposés au moyen des tourillons de chaîne (27) dans une disposition sur deux rangées, de telle sorte que quatre maillons de chaîne (201, 301, 401, 501) soient disposés sur chaque tourillon de chaîne (27).

9. Roue à chaîne (50) à utiliser avec des maillons de chaîne (1, 201, 301, 401, 501) selon l'une des revendications 1 à 6 ou avec une chaîne selon l'une des revendications 7 et 8, laquelle roue à chaîne (50) présente un axe de rotation (55) et plusieurs dents (51) définissent un plan annulaire (E) qui est perpendiculaire à l'axe de rotation (55), **caractérisée en ce que** la roue à chaîne (50) présente plusieurs appuis de chaîne (56) qui dépassent du plan (E) dans le sens axial pour appuyer chaque maillon de chaîne (1, 201, 301, 401, 501) sur l'appui de chaîne (56) correspondant.

10. Roue à chaîne selon la revendication 9, **caractérisée** en ce chaque appui de chaîne (56) est disposé entre deux dents voisines (51).

11. Roue à chaîne selon la revendication 9 ou 10, **caractérisée en ce que** l'appui de chaîne (56) présente une surface d'appui (57) sur laquelle s'appuient les bords d'appui (20, 21) du maillon de chaîne (1).

12. Roue à chaîne selon la revendication 9, 10 ou 11, **caractérisée en ce que** l'appui de chaîne (56) présente une surface d'appui latérale (58) sur laquelle s'appuie la surface d'appui (26) de la deuxième butée (10).

13. Roue à chaîne selon l'une des revendications 9 à 12, **caractérisée en ce que** chaque dent (51) présente une surface de pose (54) qui vient se poser sur une surface de prise (29) de la deuxième butée (10).

14. Unité d'entraînement, **caractérisée en ce qu'**elle présente une chaîne (100) selon l'une des revendications 8 à 9 et une roue à chaîne (50) selon l'une des revendications 9 à 13.

15. Unité d'entraînement selon la revendication 14, **caractérisée en ce que** la chaîne (100) est renvoyée par la roue à chaîne (50) de telle manière que dans la zone de renvoi de la roue à chaîne (50), un maillon de chaîne (301) repose par une première butée (9) sur une deuxième butée (10) d'un premier maillon de chaîne voisin (501) et une deuxième butée (10) du maillon de chaîne (301) est écartée selon un angle d'une première butée (9) d'un deuxième maillon de chaîne voisin (501).

16. Unité d'entraînement selon l'une des revendications 14 ou 15, **caractérisée en ce que** les surfaces de traction (15, 16) en correspondance des butées (9, 10) contiguës de deux maillons de chaîne voisins (301, 501) sont disposées dans la zone de renvoi de la roue à chaîne (50) dans le sens radial par rapport à l'axe de rotation (55) de la roue à chaîne (50) dans une première direction de l'espace et perpendiculairement à l'axe de rotation (55) de la roue à chaîne dans une deuxième direction de l'espace.
